# EUROPÄISCHE PATENTSCHRIFT

(11) **EP 2 015 918 B1**
(45) Veröffentlichungstag und Bekanntmachung des Hinweises auf die Patenterteilung: **13.04.2011**
(21) Anmeldenummer: 07728786.0
(22) Anmeldetag: 04.05.2007
(51) Int. Cl.: B29C 45/56

(54) **SPRITZGIESSANLAGE ZUM HERSTELLEN PROFILIERTER, LÄNGLICHER BAUTEILE**
INJECTION-MOLDING INSTALLATION FOR PRODUCING PROLIFERATED, ELONGATED PARTS
INSTALLATION DE MOULAGE PAR INJECTION POUR LA FABRICATION DE COMPOSANTS PROFILES LONGITUDINAUX

(30) Priorität: 05.05.2006 AT 7862006
(43) Veröffentlichungstag der Anmeldung: 21.01.2009
(73) Patentinhaber: Dipl. Ing. Gottfried Steiner, Ingenieurbüro Für Kunststofftechnik, 8724 Spielberg (AT)
(72) Erfinder: STEINER, Gottfried, 8724 Spielberg (AT); KRIVEC, Thomas, 8740 Zeltweg (AT)
(74) Vertreter: Vinazzer, Edith
(86) Internationale Anmeldenummer: PCT/EP2007/054333
(87) Internationale Veröffentlichungsnummer: WO 2007/128787

(56) Entgegenhaltungen:
- WO-A-02/057064
- WO-A-2006/045720

## Beschreibung

Die Erfindung betrifft eine Spritzgießanlage mit einer ortsfesten und einer beweglichen Maschinenaufspannplatte und zumindest einem Spritzaggregat , sowie mit einer zwischen den Maschinenaufspannplatten angeordneten Spritzgießeinnchtung zum Herstellen profilierter, zumindest abschnittsweise länglicher Bauteile,
mit einem der einen Maschinenaufspannplatte zugeordneten schließseitigen Formmodul,
mit einem der anderen Maschinenaufspannplatte zugeordneten düsenseitigen Formmodul,
sowie mit einem zwischen diesen Modulen angeordneten Schlittenmodul mit einem an dem schließ- oder düsenseitigen Formmodul beweglich gelagerten Schlitten, welcher ein ursprüngliches Formnest mitbildet,
und mit einem Antriebsmodul zur Steuerung der Bewegung des, oder der
beweglichen Teile(s) des Schlittenmoduls,
wobei über eine Bewegung des Schlittens der Bauteil inner- und außerhalb der Form in vorgesehen Größe und Gestalt hergestellt wird.

Sprüzgießanlagen sind in unterschiedlichen Ausführungsformen bekannt. Übliche Spritzgießanlagen weisen als Hauptkomponenten eine ortsfeste Maschinenaufspannplatte und dieser gegenüberliegend eine bewegliche Maschinenaufspannplatte auf Auf der Seite der ortsfesten Maschinenaufspannplatte befindet sich ferner das Spritzaggregat, von weichem die Formmasse zu der oder den Angussbuchse(n) der Spritzgießform transportiert wird Die Angussbuchse befindest sich in einem Formteil der Spritzgießform, welcher an der ortsfesten Maschinenaufspannplatte mit Spannelementen oder dergleichen lösbar befestigt ist. An der beweglichen Maschinenaufspannplatte ist ein weiteres Formteil, das schließseitige Formteil der Spritzgießform mittels Spannelementen lösbar befestigt.

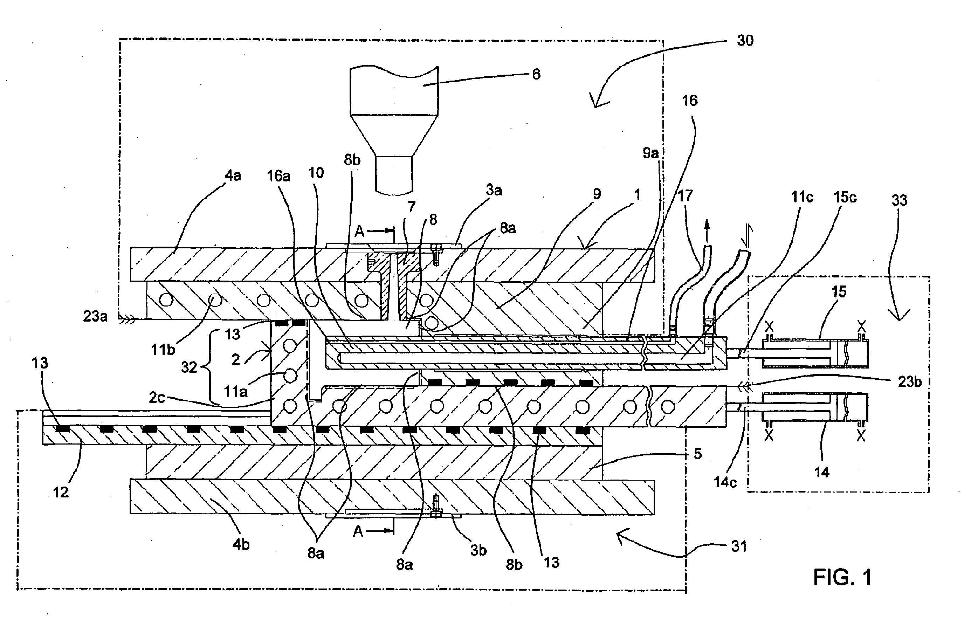

Die WO-A-2006/045720 befasst sich mit einem neuartigen Verfahren und einer neuartigen Vorrichtung zum Herstellen profilierter, zumindest abschnittsweise länglicher Bauteile aus flüssigen oder zähflüssigen und erstarrenden Formmassen. Dabei wird die Formmasse in ein ursprüngliches Formnest eingespritzt, welches sich nach dem Auffüllen mit Formmasse unter Fortsetzen des Einspritzens zu einem formgebenden Bereich ausdehnt, wobei die eingespritzte Masse unter Verlängerung des zu bildenden Bauteils stetig wegtransportiert wird bis sie schließlich aus der Form heraus tritt. Formmasse wird dabei derart lange eingespritzt, bis das zu bildende Bauteil seine endgültige Länge erreicht hat. Die eingespritzte Masse wird durch einen Schlitten wegtransportiert, welcher gemeinsam mit der erstarrten Masse aus der Spritzgießform austritt. Die Hauptkomponenten der nach einem derartigen Verfahren arbeitenden Spritzgießform lassen sich in die im Oberbegriff des Anspruches 1 angeführten Moduli einteilen. Eine ausführlichere Beschreibung der einzelnen Moduli ist in der Figurenbeschreibung enthalten und wird dort anhand der Figuren 1 bis 6 erläutert.

Der Erfindung liegt die Aufgabe zugrunde, eine Spritzgießaniage derart auszuführen, dass unter Verwendung der neuartigen Spritztechnologie Bauteile in einer hohen Stückzahl auf besonders wirtschaftliche Weise herstellbar sind.

Eine erfindungsgemäße Spritzgießanlage ist dadurch gekennzeichnet, dass das schließseitige Formmodul und/oder das düsenseitige Formmodul Bestandteil(e) der jeweiligen Maschinenaufspannplatte ist bzw. sind und derart in die Spritzgießanlage funktionell integriert Ist bzw. sind

Bei einer erfindungsgemäßen Spritzgießanlage sind Komponenten der eigentlichen Spritzgießform in die Anlage integriert, sodass diese Anlagenteile die jeweiligen Funktionen von Spritzgießformkomponenten übernehmen. Bestandteile der Spritzgießanlage sind daher baulich entsprechend adaptiert bzw. ausgeführt. Damit wird die Anzahl der Formkomponenten reduziert und es verringert sich die Komplexität der gesamten Spritzgießanlage. Das erfindungsgemäße integrierte Anlagenkonzept bietet daher vor Allem bei der Produktion von Bauteilen in hohen Stückzahlen deutliche wirtschaftliche Vorteile.

Bei einer erfindungsgemäßen Spritzgießanlage bleiben funktionell nicht integrierte Module auswechselbar (Anspruch 2). Es kann daher im Einzelfall entschieden werden, welche der Module im Sinne einer möglichst wirtschaftlichen und rationellen Produktion in Bestandteile der Anlage integriert werden und welche austauschbar sein sollen.

Bei einer Ausführungsvariante der Erfindung ist das schließseitigen Formmodul der Spritzgießeinrichtung Bestandteil der beweglichen Maschinenaufspannplatte (Anspruch 3). Bei einer weiteren Ausführungsform ist das düsenseitige Formmodul der Spritzgießeinrichtung Bestandteil der festen Maschinenaufspannplatte (Anspruch 4). Sind zusätzlich die schließseitigen Komponenten und der Schlitten integriert verbleiben als austauschbare Teile die unmittelbar formgebenden Komponenten, dies sind insbesondere die schließseitig und düsenseitig vorgesehenen Einsätze. Die damit gegebenen Vollintegration ist hinsichtlich der Investitionskosten besonders wirtschaftlich, vor allem dann, wenn große Stückzahlen produziert werden.

Der Schlitten des Schlittenmoduls kann in einem weiteren integrationsschritt mitintegriert werden, indem er an der beweglichen Maschinenaufspannplatte aufgenommen und geführt ist (Anspruch 5). Durch diese Maßnahmen wird ein hochintegriertes Anlagenkonzept zur Verfügung gestellt, welches vor allem bei der Produktion von Bauteilen in hohen Stückzahlen wirtschaftliche Vorteile mit sich bringt.

Am Schlitten können in jedem Fall - ob integriert oder nicht integriert - auswechselbare Formeinsätze positionierbar sein (Anspruch 6). Bei integriertem Schlitten schränkt zwar seine vorgegebene Geometrie die Anzahl der möglichen Bauteilausführungen etwas stärker ein, insbesondere ist die maximale Bauteillänge durch die Schlittenlänge vorgegeben, aber das hochintegrierte Anlagenkonzept bietet, wie bereits erwähnt, wirtschaftliche Vorteile bei der Produktion von hohen Stückzahlen.

Bei einer der möglichen Ausführungsvarianten der Erfindung ist das Antriebsmodul an der beweglichen Maschinenaufspannplatte angebaut und derart mit dieser fest verbunden (Anspruch 7). Das Antriebsmodul ist insbesondere seitlich an der beweglichen Maschinenaufspannplatte angebaut und mit Interfaceelementen zur lösbaren Ankopplung an den Schlitten und/oder an weitere bewegliche Formkomponenten versehen (Anspruch 8). Eine Anordnung des Antriebsmoduls an der Maschinenaufspannplatte lässt eine auswechselbare Anordnung des Schlittenmoduls weiterhin zu.

Bei einer Integration des Schlittens kann das Antriebsmodul auch am Schlitten angebaut sein (Anspruch 9). Je nach Konzept kann dies Vorteile bei der Herstellung von Bauteilen bestimmter Geometrien mit sich bringen.

Ein integriertes Antriebsmodul kann vorteilhafter Weise von der zentralen Anlageregelung und -steuerung der Spritzgießanlage gesteuert und geregelt werden (Anspruch 10).

Weitere Merkmale, Vorteile und Einzelheiten der Erfindung werden anhand der Zeichnung, die schematisch mehrere Ausführungsbeispiele darstellt, näher beschrieben. Dabei zeigen
Fig. 1 bis Fig. 6 eine Ausführungsform einer Spritzgießform gemäß dem Stand der Technik, teilweise in unterschiedlichen Stadien des Spritzvorganges.
Fig. 1 einen Längsschnitt durch diese Spritzgießform,
Fig. 2 einen Querschnitt entlang der durch die Linie A-A der Fig. 1 gekennzeichneten Schnittebene,
Fig. 3 bis Fig. 5 zu Fig. 1 analoge Längsschnitte in unterschiedlichen Stadien während des Einspritzens,
Fig. 6 im Längsschnitt die geöffnete Spritzgießform gemäß Fig. 1 nach Beendigung des Spritzgießvorganges,
Fig. 7 eine vereinfachte und schematisierte Ausführung der Spritzgießform gemäß Fig. 1 bis 6 eingefügt in eine Spritzgießanlage,
Fig. 8, Fig. 9, Fig. 10a und Fig. 10b unterschiedliche erfindungsgemäße Varianten der funktionellen Integration von Formkomponenten bzw. Formmodulen der Spritzgießform in die Spritzgießanlage.

Fig. 1 bis 6 zeigen eine gemäß der internationalen Patentanmeldung WO-A-2006/045720 ausgeführte Spritzgießform. Die dargestellte Spritzgießform ist eine Variante aus einer Vielzahl von Varianten, Spritzgießformen gemäß der genannten PCT-Anmeldung auszuführen.

Bestandteile eines Formteils der in Fig. 1 gezeigten Spritzgießform sind ein an einer Aufspannplatte 4a angeordneter feststehender Formeinsatz 9, eine den Formeinsatz 9 und die obere Aufspannplatte 4a durchsetzende Angussbuchse 7 und ein oberer Zentrierring 3a, welcher an der oberen Aufspannplatte 4a befestigt ist. Die Aufspannplatte 4a mitsamt dem feststehenden Formeinsatz 9 und den weiteren, an diesen Teilen angeordneten bzw. befestigten Bauteilen bilden die düsenseitigen Komponenten bzw. das düsenseitige Formmodul 30.

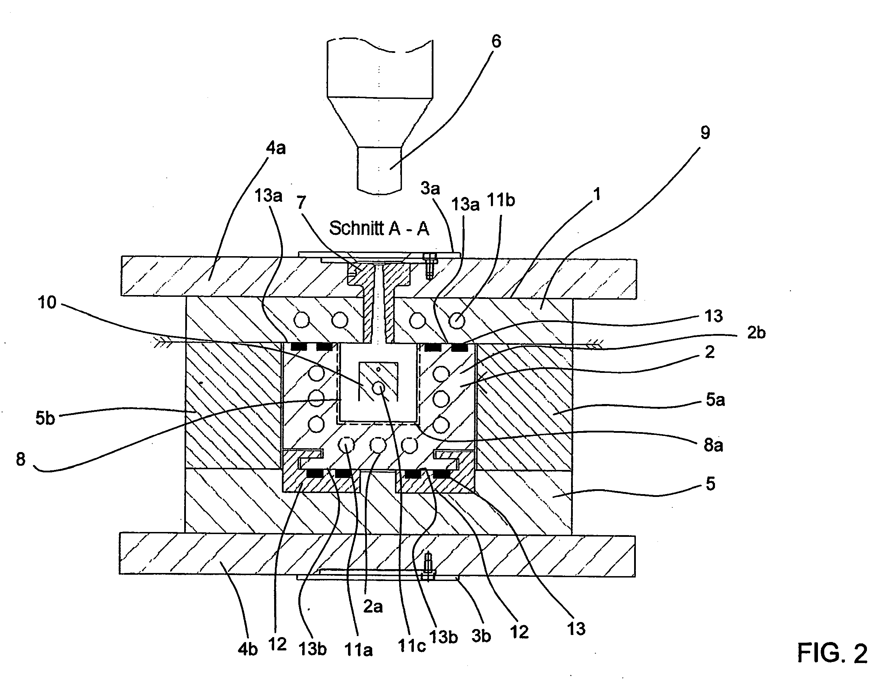

Zu einem weiteren Formteil gehören eine zweite Aufspannplatte 4b, ein an dieser befestigter zweiter Zentrierring 3b und eine mit der Aufspannplatte 4b verbundene Formplatte 5 mit Stützleisten 5a, 5b, die in Fig. 2 zu erkennen sind. Diese Komponenten sowie gegebenenfalls noch weitere, an diesen angeordnete Bestandteile der Spritzgießform bilden die schließseitigen Komponenten bzw. das schließseitige Formmodul 31.

An der Formplatte 5 ist ein Schlitten 2, am feststehenden Formeinsatz 9 ist ein Kern 10 verschiebbar angeordnet. Der Formeinsatz 9, welcher als ein etwa ptattenförmiger Bauteil mit einem Ansatz 9a ausgeführt ist, ist zur verschieblichen Lagerung der Kerns 10 in Längsrichtung von einer rechteckförmigen Öffnung durchsetzt, wie es insbesondere Fig. 1 in Verbindung mit Fig. 2 zeigt. Der Ansatz 9a des Formeinsatzes 9 liegt innen auf einem Basisschenkel 2a des im Querschnitt U-förmigen Schlittens 2 auf, welcher mit zwei weiteren Schenkein 2b, wie es Fig. 2 zeigt, am Formeinsatz 9 anliegt. Der Schlitten 2 ist innenseitig mit einer an die Geometrie des zu bildenden Bauteils angepassten Geometrie versehen oder kann mit entsprechenden Einsätzen bestückt werden.

Der Kern 10 und der Schlitten 2 bilden ein weiteres Modul der Form, welches im Folgenden als Schlittenmodul 32 bezeichnet wird.

Zwischen einem den Ansatz 9a überragenden Endabschnitt des Kerns 10, Teilbereichen des Formeinsatzes 9, den Schenkeln 2a, 2b des Schlittens 2 und einer Stirnwand 2c desselben wird ein ursprüngliches Formnest 8 gebildet.

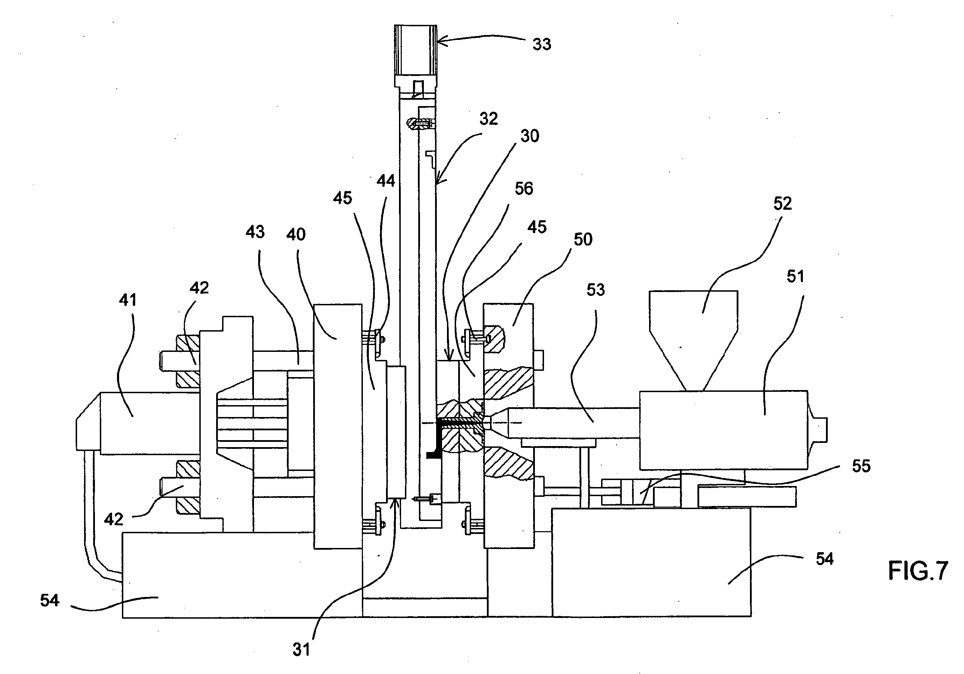

Bei einer anderen Ausführungsform der Spritzgießform, welche in Fig. 7 bis 10 der bereits zitierten WO-A-2006/045720 dargestellt ist, wird kein Kern vorgesehen, sondern lediglich ein beweglicher Formeinsatz. Bei weiteren, ebenfalls in der zitieren WO-A-2006/045720 geoffenbarten Ausführungsvarianten können zwei oder mehr Angussbuchsen für die Kunststoffschmelze vorgesehen werden.

Der Formeinsatz 9, der Schlitten 2 und der Kern 10 können über Kühlbohrungen 11 a, 11 b, 11 c temperiert werden, um den Erstarrungsvorgang des eingespritzten Materials zu beeinflussen. In den Bereichen 8a können die Formnestoberflächen, da hier eine Relativbewegung zum Spritzling während des Spritzgießvorganges stattfindet, dreidimensional strukturiert sein. Formnestoberflächen 8b mit einer Relativbewegung können in Richtung der stattfindenden Bewegung verlaufende Strukturen aufweisen. Analoges gilt für die Oberfläche des Kerns 10. Der bewegliche Schlitten 2 ist, wie es Fig. 1 und 2 zeigen, in zwei Führungsleisten 12 längsverschiebbar geführt. Der Kern 10 ist im feststehenden Formeinsatz 9 geführt. Eine Anzahl von im Schlitten 2, im Formeinsatz 9 und in Führungsleisten 12 eingesetzten Gleitelementen 13 erleichtert das Gleiten bzw. die Relativbewegung zwischen dem Schlitten 2 und dem feststehenden Formeinsatz 9 sowie dem Schlitten 2 und den Führungsleisten 12.

Ein weiteres Modul, welches nachfolgend als Antriebsmodul 33 bezeichnet wird, ist für die Bewegung des beweglichen Schlitten 2 sowie des Kerns 10 zuständig. Bestandteile des Antriebsmoduls 33 können nicht dargestellte Motoren sein, welche die in Fig. 1 gezeigten Linearantriebe 14, 15, welche manuell, elektrisch, mechanisch, pneumatisch oder, wie dargestellt, hydraulisch betätigbar sein können, entsprechend in Bewegung setzen und steuern. Dabei kann zusätzlich die Bewegung des Schlittens 2 über den im Formnest 8 wirksamen Spritzdruck beeinflusst bzw. ausgelöst werden.

Der als langgestreckter Bauteil mit rechteckförmigem Querschnitt ausgeführte Kern 10 ist in Längsrichtung von einer Bohrung 16 durchsetzt, welche am stirnseitigen, im Formnest 8 befindlichen Ende des Kerns 10 in ein Gasventil 16a mündet. Am anderen Ende der Bohrung 16 kann über einen Schlauch 17 Druckluft oder ein anderes Gas oder eine Flüssigkeit in das Formnest 8 geblasen werden.

Fig. 1 und Fig. 2 zeigen den Ausgangszustand bei bereits geschlossener Form. Das Formnest 8 kann mit Luft gefüllt, mit Schutzgas gespült oder evakuiert sein. Über die Aufspannplatten 4a, 4b wird die Schließkraft auf die Form aufgebracht.

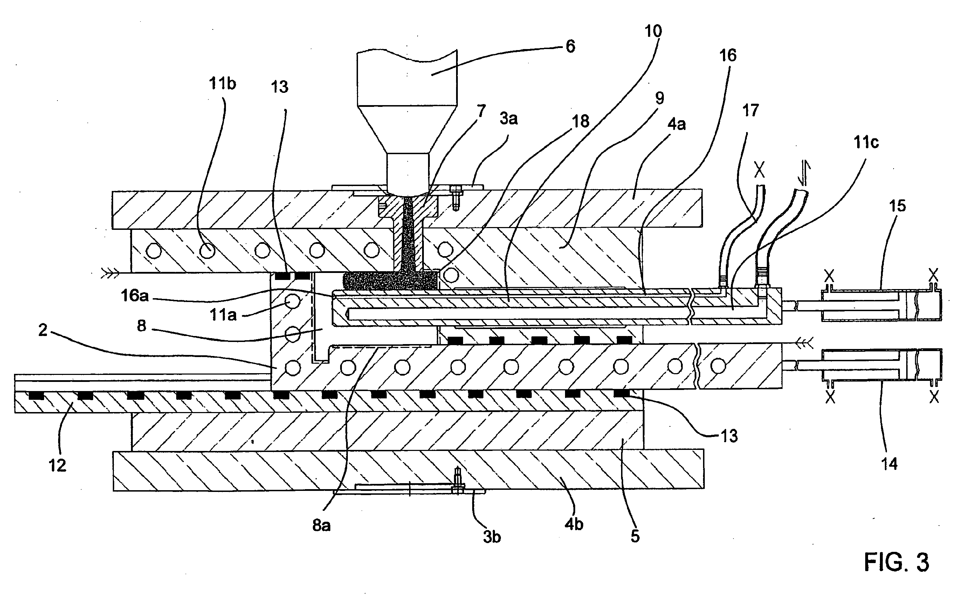

Fig. 3 zeigt den Beginn des Einspritzvorganges. Das Spritzaggregat 6 ist an der Angussbuchse 7 angesetzt und es wird plastifizierte Masse 18 in das Formnest 8 eingespritzt. Die Ventile der Linearantriebe 14, 15 sowie das Gasventil 16a sind geschlossen.

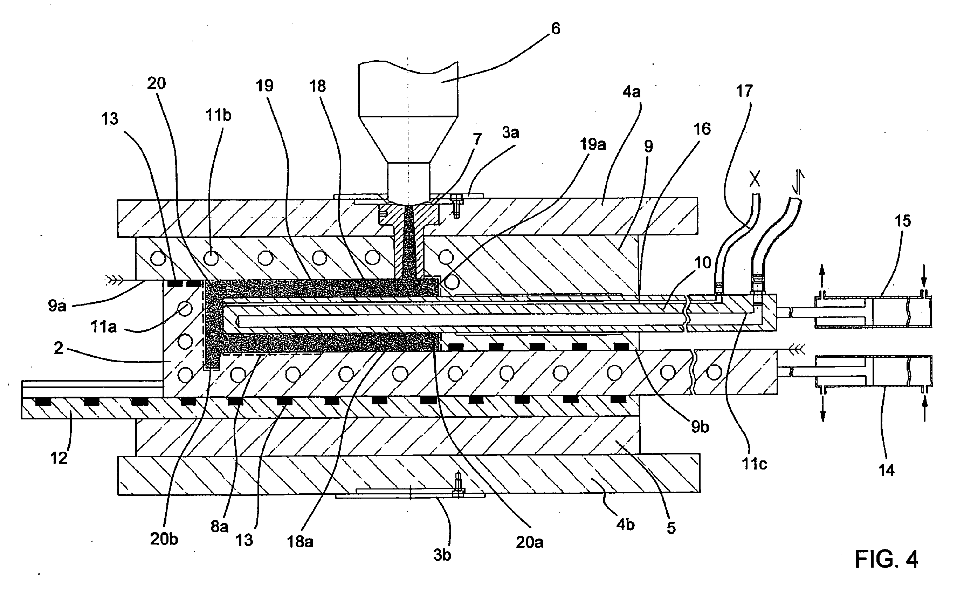

Sobald das ursprüngliche Volumen des Formnestes 8 mit Masse 18 aufgefüllt ist, baut sich im Formnest 8 Druck auf, welcher gegen den Widerstand der Linearantriebe 14, 15 und entgegen der von der Schließkraft abhängigen Reibungsverluste eine übereinstimmende Verschiebung des Schlittens 2 und des Kerns 10 zu Folge hat. Eine erwünschte und kontrollierte Bewegung des Schlittens 2 und des Kerns 10 relativ zum feststehenden Formeinsatz 9, insbesondere entlang der Gleitflächen 9a und 9b gemäß Fig. 4, wird durch eine entsprechende Steuerung bzw. Regelung der Druckverhältnisse im Formnest 8 über das Spritzaggregat 6 sowie eine entsprechende Steuerung der Linearantriebe 14, 15 gewährleistet.

Die eingespritzte Masse, welche beispielsweise eine thermoplastische Schmelze ist, erstarrt sukzessive und ausgehend vom flüssigen Ausgangszustand, welcher durch die mit den Bezugsziffern 18 und 19 versehenen Bereiche versinnbildlicht ist, in Abhängigkeit von Druck, Temperatur und Zeit über den sich im vergrößernden Formnest 8 zurückgelegten Weg, etwa im Bereich der Strömungsschatten 19a, 20a des Formnestes 8. Die Bezugsziffern 19 und 20 kennzeichnen Bereiche der eingespritzten Masse in unterschiedlichen Abkühl- bzw. Erstarrungsstadien. An der Gleitfläche 9a des Formeinsatzes 9 erfolgt eine Relativbewegung zwischen der Spritzmasse 18, 19, 20 und dem Formeinsatz 9, die mit jener beim Formgebungsprozess an einer Extrusionsdüse vergleichbar ist. Am Schlitten 2 erfolgt keine Relativbewegung zur eingespritzten Masse, was die Ausformung von dreidimensionalen Geometrieelementen 20b und strukturierten Oberflächen 8a ermöglicht. Im Bereich der Angussbuchse 7 und um den Kern 10 wird insbesondere im Bereich 18a plastifiziertes Material nachgefördert und bildet in Fließrichtung kontinuierlich neue Oberflächen, gleichzeitig erfolgt die Verlängerung des entstehenden Spritzlings.

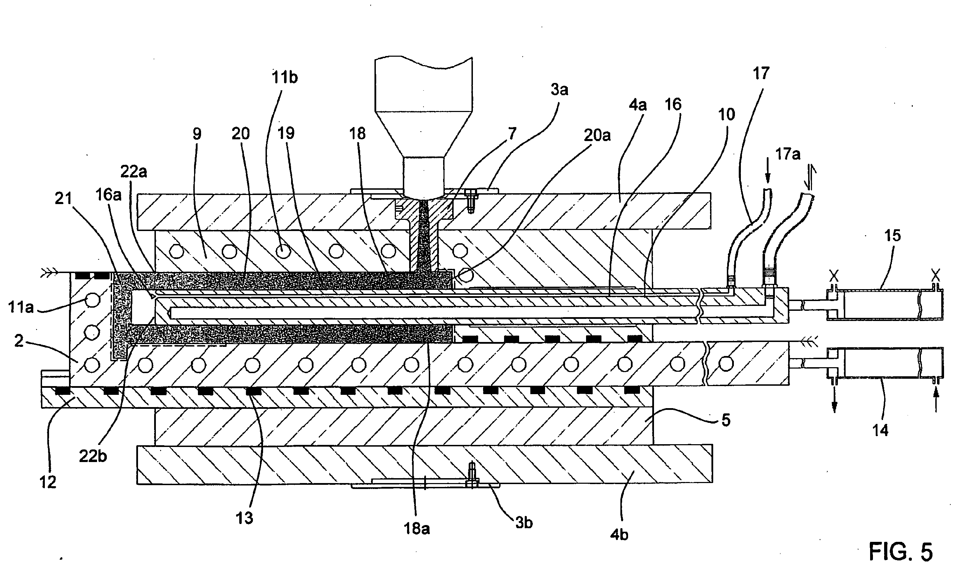

Gemäß Fig. 5 ist schließlich die zuerst zugeführte Masse im Bereich 21 bereits vollkommen erstarrt, sodass, wie ebenfalls Fig. 5 zeigt, dieser Teil des Spritzlings aus der Form austreten kann. Der Bereich 21 löst sich dabei sowohl vom feststehenden Formeinsatz 9 als auch vom Kern 10. Der Linearantrieb 15 des Kerns 10 wird angehalten, das Gasventil 16a wird geöffnet, um den entstehenden Hohlraum mit einem Medium 17a zu füllen. Der Druck des einströmenden Mediums kann dabei so gewählt werden, dass die noch nicht vollständig erstarrte Masse im Bereich des entstehenden Hohlraums vom druckbeaufschlagten Medium bis zur endgültigen Erstarrung in die Formwandungen des Schlittens 2 und des Formeinsatzes 9 gedrückt wird. Der profilierte Spritzling wird damit unter Ausnutzung des Innendrucks kalibriert.

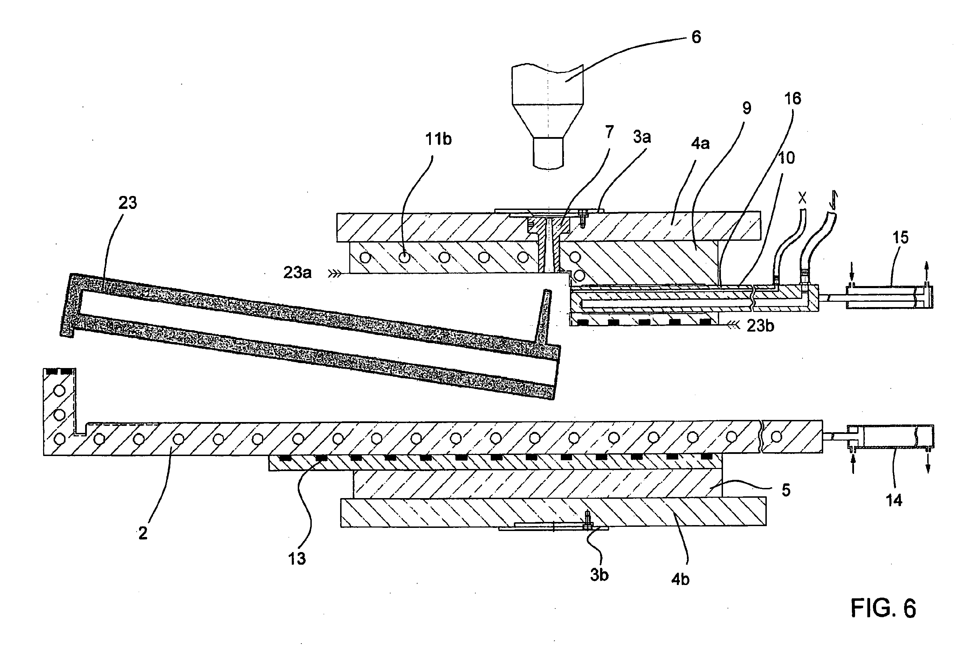

Wenn der derart geformte, profilierte Bauteil die vorgesehene Länge erreicht hat, wird auch der Schlitten 2 angehalten, in dem der Linearantrieb 14 angehalten wird. Analog zu einem konventionellen Spritzprozess wird der Spritzzyklus mit einer Nachdruck- und Kühlzeit fortgesetzt bzw. beendet. Das Spritzaggregat 6 wird nach dem Erstarren des Angusses und dem Aufdosieren zurückgefahren. Nach der vollkommenen Erstarrung des profilierten Spritzlings wird der Kern 10 zurückgefahren bis er sich außerhalb des Spritzlings befindet. Nun kann eine Befüllung des Hohlraumes mit einer reaktiven und/oder erstarrenden Flüssigkeit erfolgen. Anschließend wird die Form, wie Fig. 6 zeigt, geöffnet, die Formtrennbereiche sind durch die Bezugsziffern 23a, 23b angedeutet. Zum Auswerfen des Spritzlings 23 können je nach den gegebenen Umständen konventionelle, mechanische, pneumatische, hydraulische oder elektrische Auswurfelemente wirksam werden, die gesondert nicht dargestellt sind. Die Entnahme des Spritzlings 23 kann wie bei konventionellen Spritzverfahren manuell, mit einer entsprechenden Einrichtung oder auch durch freien Fall erfolgen. Abschließend wird durch eine entsprechende Ansteuerung des Linearantriebes 14 der Schlitten 2 wieder in seine Ausgangsposition zurückgefahren. Auch der Kern 10 wird wieder an seine Ausgangsposition bewegt, sodass nach dem Schließen der Form der Zustand gemäß Fig. 1 wieder erreicht ist und wieder ein Spritzzyklus eingeleitet werden kann.

Mit einer derartigen Spritzgie βform lassen sich Bauteile unterschiedlicher Geometrie herstellen. So kann auch ein Vollprofil oder ein stirnseitig geschlossenes Hohlprofil als Einlegeteil verwendet werden, sofern die Eigensteifigkeit des Einlegeteiles dem Spritzdruck standhält. In diesem Fall ist ein Kern nicht erforderlich und es kann das Einlegeteil über einen Adapter am hinteren Ende durch den Linearantrieb 15 mit dem profilierten Spritzling mitbewegt werden. Eine Kopplung von Einlegeteilen mit dem Schlitten 2 stellt weitere Varianten zur Verfügung. Werden anstelle der beiden Führungsleisten 12 Führungsleisten verwendet, die über Linearantriebe bewegbar sind und normal zur Bewegungsrichtung des Schlittens 2 verschiebbar sind, ergibt sich für den herstellbaren Formkörper ein zusätzlicher Freiheitsgrad der Ausbildung normal zur Hauptrichtung des Bauteiles. Dadurch ist die Möglichkeit gegeben, im Rahmen der Abmessungen des Formenbaus, Bauteile mit einem nichtlinearen Pfad herzustellen. Auf diese Weise können kontinuierlich gekrümmte Profile oder Profile mit winkeligen Übergangsbereichen hergestellt werden. Eine weitere Möglichkeit zur Herstellung von gekrümmten Profilen ergibt sich durch die Verwendung von gekrümmten Schlitten bzw. Formeinsätzen. Dabei kann der Schlitten 2 von einem Linearantrieb der beschriebenen Art beispielsweise entlang einer Kreisbahn, relativ zu den feststehenden Formkomponenten, bewegt werden.

Fig. 7 zeigt die in einer herkömmlichen Spritzgießanlage positionierte Spritzgießform. Die dargestellte Spritzgießanlage ist lediglich eine der möglichen Ausführungen einer Spritzgießanlage.

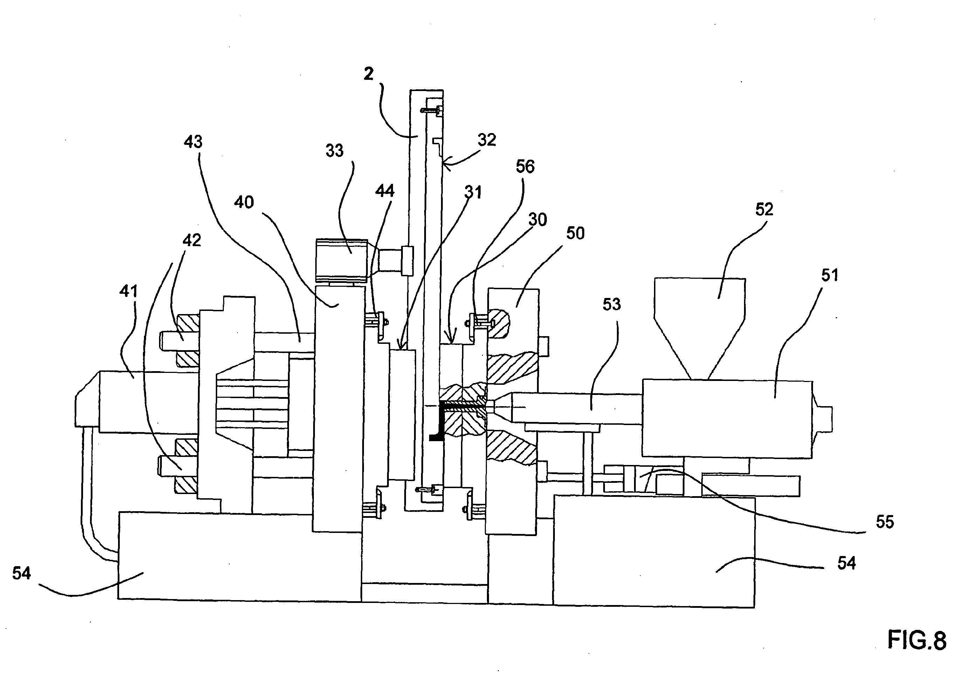

In Fig. 7 und den weiteren, die Spritzgieβanlage zeigenden Figuren 8, 9, 10a und 10b sind als Hauptkomponenten auf der einen Seite der Spritzgießanlage eine bewegliche Maschinenaufspannplatte 40, ein Hydraulikaggregat 41 zur Betätigung der Maschinenaufspannplatte 40, Einstell- und Fixiereinheiten 42 sowie Führungseinrichtungen 43 und ein Maschinengestell 54 vorgesehen.

Auf der anderen Seite der Spritzgießform weist die Spritzgießanlage eine ortsfeste Maschinenaufspannplatte 50 und ein Spritzaggregat 51 auf, welchem die Ausgangsmaterialien durch einen Materialtrichter 52 zugeführt werden. Eine Schnecke in einem Zylinder 53 transportiert das Material aus dem Spritzaggregat 51 zur Angussbuchse der Spritzgießform und wird hier angekoppelt. Dargestellt sind ferner ein Maschinengestell 54 sowie ein Hydraulikaggregat 55 zum Aufbringen der Anpress- und Schließkräfte.

Eine übliche Positionierung der Spritzgießform zeigt Fig. 7. Die Aufspannplatte 4b wird mittels Spannelementen 44 an der beweglichen Maschinenaufspannplatte 40 und die Aufspannplatte 4a mittels Spannelementen 56 an der ortsfesten Maschinenaufspannplatte 50 befestigt. Die Spritzgießform kann daher komplett von der Spritzgießanlage entfernt werden und diese kann zur Herstellung von Bauteilen in herkömmlichen bzw. anderen Spritzgießformen verwendet werden.

Ausgehend von der in Fig. 7 dargestellten üblichen Positionierung der Spritzgießform sind verschiedene erfindungsgemäße Integrationsvarianten der Funktion ihrer Module bzw. von Komponenten ihrer Module möglich. Dabei kann ein Modul oder es können mehrere der beschriebenen Module 30, 31, 32 und 33 zur Gänze oder teilweise funktionell in die Spritzgießanlage integriert werden und derart Bestandteile der Spritzgießanlage werden. Dadurch werden bestimmte Funktionen nicht mehr über die Spritzgießform bereitgestellt, sondern sie werden bereits in einem Teil oder in mehreren wesentlichen Teilen von der Spritzgießanlage übernommen.

Fig. 8 zeigt eine mögliche Integrationsstufe, bei der das Antriebsmodul 33 in die Spritzgießanlage integriert ist. Das Antriebmodul 33 ist auf die schließseitige, bewegliche Maschinenaufspannplatte 40 aufgebaut und derart mit dieser fest verbunden. Die zum Bewegen der Komponenten des Schlittenmoduls 32 erforderlichen Aggregate, wie Motoren, Antriebe, Getriebe und dergleichen, werden von der Spritzgießanlage bereitgestellt. Von der Spritzgießanlage entfernbare und somit austauschbare Moduli der Spritzgießform sind das düsenseitige Formmodul 30, das schließseitige Formmodul 31 und das Schlittenmodul 32. Das düsenseitige Formmodul 30 und das schließenseitige Formmodul 31 sind mittels der Spannelemente 44 und 56 an den Maschinenaufspannplatten 40, 50 positioniert.

Das Antriebsmodul 33 bzw. seine Aggregate kann bzw. können über entsprechende Schnittstellenteile, die nach dem Stand der Technik ausgeführt sein können, beispielsweise Schnellkupplungen und dergleichen, mit dem Schlittenmodul 32 in Verbindung gebracht werden. Die Regelung und Steuerung des Antriebsmoduls 33 bzw. der Komponenten des Moduls 33 erfolgen entweder vollintegriert als Bestandteil der kompletten Anlagenregelung oder teilintegriert über ein mit der Anlagenregelung verbundenes Steuer- und Regelmodul.

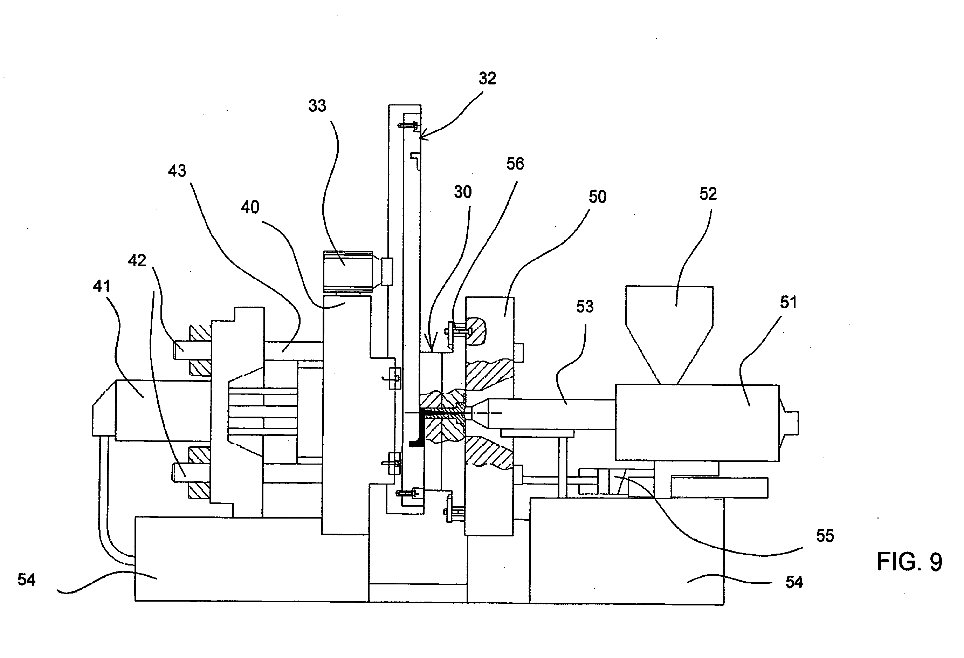

Eine weitere Integrationsstufe, bei der sowohl das Antriebsmodul 33 und die schließseitigen Komponenten 31 in die Spritzgießanlage eingebunden sind, zeigt Fig. 9. Das Antriebsmodul 33 wird analog zu Fig. 8 integriert, das schließseitige Formmodul 31 fällt weg, indem seine Komponenten Bestandteile der beweglichen Maschinenaufspannplatte 40 werden. Die bewegliche Maschinenaufspannplatte 40 ist daher mit den zur Aufnahme und Führung des Schlittens 2 (Fig. 1) erforderlichen Komponenten und Interfaceteilen versehen. Von der ursprünglichen Spritzgießform verbleiben das Schlittenmodul 32 und die düsenseitigen Komponenten 30. Diese Spritzgießanlage gestattet es, zur Herstellung von Bauteilen unterschiedlicher Geometrien, insbesondere unterschiedlicher Längen, auf einfache Weise und mit geringem Aufwand den Schlitten des Schlittenmoduls sowie das düsenseitige Formmodul, insbesondere durch dessen formgebende Einsätze, auszuwechseln. Diese Ausführung bietet daher wirtschaftliche Vorteile gegenüber der Ausführung mit einer autonomen Spritzgießform, insbesondere dann, wenn häufig unterschiedlich aufgebaute Bauteile hergestellt werden sollen.

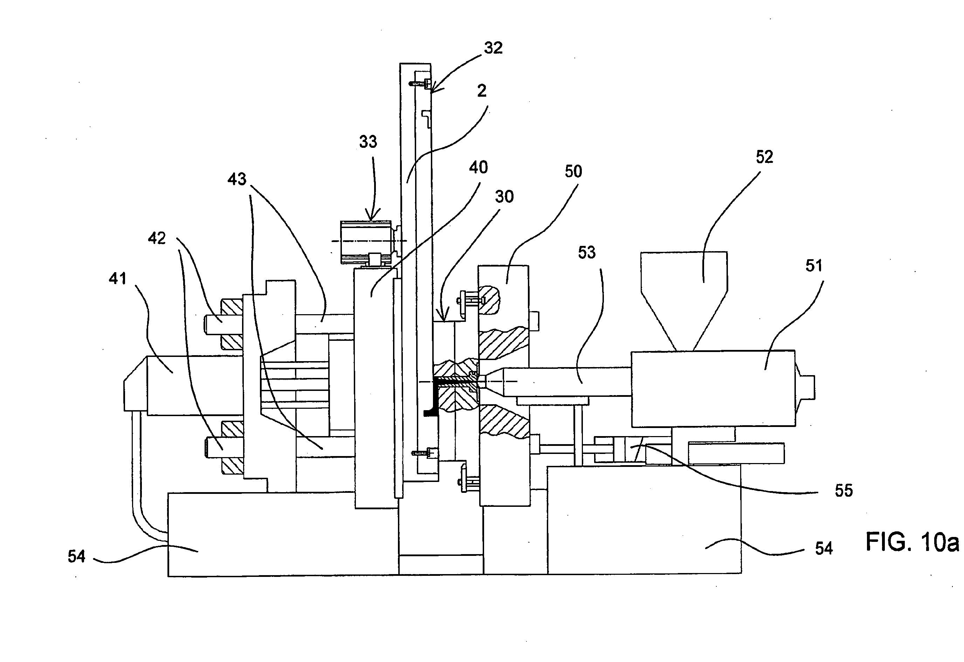

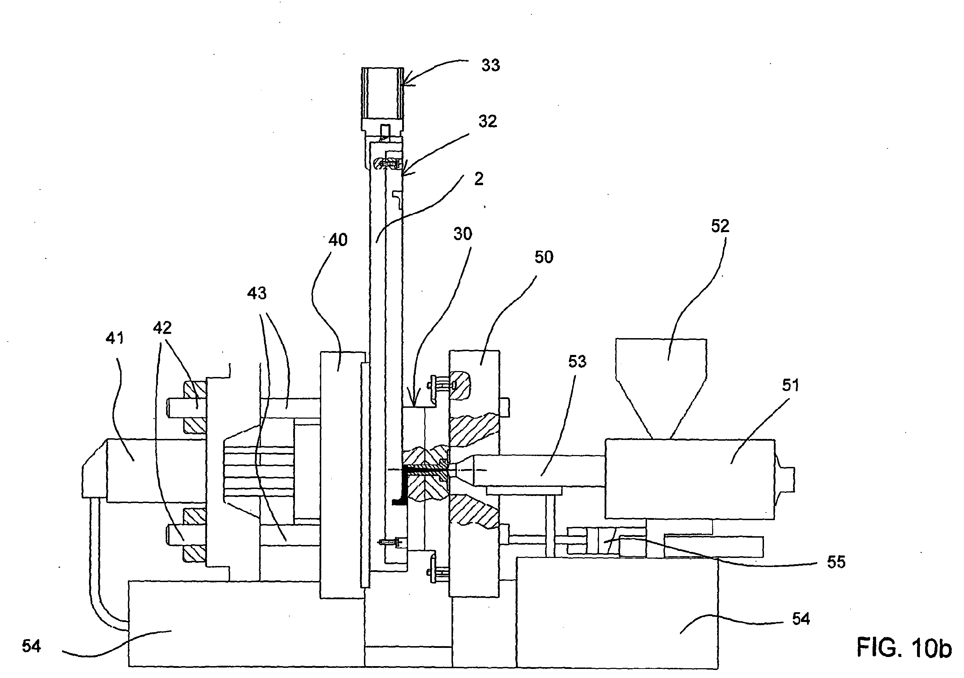

Bei einer weiteren Integrationsstufe, von welcher zwei Ausführungsvarianten in den Fig. 10a und 10b dargestellt sind, wird der Schlitten 2 des Schlittenmoduls 32 funktionell in die Spritzgießanlage integriert. In die schließseitige bewegliche Maschinenaufspannplatte 40 der Spritzgießanlage sind sowohl Elemente zur Führung und Lagerung des Schlittens 2 als auch der Schlitten 2 selbst integriert bzw. eingebaut. Auch das Antriebsmodul 33 ist als integraler Teil der Spritzgießanlage konzipiert. Fig. 10a und 10b zeigen unterschiedliche Varianten hinsichtlich der Anordnung des Antriebsmoduls 33, in Fig. 10a analog zur Ausführungsform gemäß Fig. 8 in Fig. 10b ist eine Anordnung des Antriebsmoduls 33 am stirnseitigen Ende des integrierten Schlittens vorgesehen. Die zur Auslegung des formgebenden Bereichs erforderlichen bzw. erwünschten Formeinsätze können auswechselbar am integrierten Schlitten montiert werden. Durch einen Austausch von Formeinsätzen am Schlitten sowie am düsenseitigen Formmodul 30 können Bauteile mit sehr unterschiedlichen Geometrien gefertigt werden. Es ist zwar durch die vorgegebene Geometrie des Schlittens die Anzahl der möglichen Bauteilgeometrien im Vergleich zu den bereits beschriebenen Teilintegrationen etwas stärker eingeschränkt, insbesondere ist die Bauteillänge durch die vorgegebene Schlittenlänge begrenzt, aber ein derart hochintegriertes Anlagenkonzept bietet wirtschaftliche Vorteile bei der Produktion von Bauteilen in hohen Stückzahlen.

Gemäß einer nicht dargestellten Ausführungsvariante kann auch das düsenseitige Formmodul 30 in die Spritzgießanlage integriert sein. Ein vorhandener Bauteil der Spritzgießanlage wird derart adaptiert bzw. angefügt, dass er zumindest einen Teil der Funktion(en) des düsenseitigen Formmoduls 30 übernimmt. In diesem Fall würden nur noch die unmittelbar formgebende Komponenten, die schließseitig und düsenseitig vorgesehenen Einsätze, gewechselt werden können. Eine derartige Vollintegration stellt für die Herstellung von Produkten bzw. Bauteilen hinsichtlich der Investitionskosten eine sehr wirtschaftliche Variante dar. Insbesondere wenn eine große Stückzahl produziert wird, sind die Kosten derartiger Anlagen signifikant niedriger als bei einer "nichtintegrierten" Anlage.

Die für den Ausstoß des gebildeten Bauteils erforderliche Auswerfereinheit kann sowohl im Schlittenmodul 32 als auch in den Formeinsätzen untergebracht werden. Wie bereits erwähnt, kann das Auswerfen der entstehenden Bauteile am Ende des Spritzprozesses auf eine der herkömmliche Weisen erfolgen.

Die Erfindung ist im Rahmen des Patentansprüche bei allen bekannten Spritzgießanlagen anwendbar bzw. einsetzbar, unabhängig von der jeweiligen Anordnung der Bestandteile der Spritzgießanlage.

## Patentansprüche

1. Spritzgießanlage mit einer ortsfesten und einer beweglichen Maschinenaufspannplatte (40, 50) und zumindest einem Spritzaggregat (31), sowie mit einer zwischen den Maschinenaufspannplatten (40, 50) angeordneten Spritzgießeinrichtung zum Herstellen profilierter, zumindest abschnittsweise länglicher Bauteile,
mit einem der einen Maschinenaufspannplatte (40) zugeordneten schließseitigen Formmodul (31),
mit einem der anderen Maschinenaufspannplatte (50) zugeordneten düsenseitigen Formmodul (30),
sowie mit einem zwischen diesen Modulen (30, 31) angeordneten Schlittenmodul (32) mit einem an dem schließ- oder düsenseitigen Formmodul (30, 31) beweglich gelagerten Schlitten (2), welcher ein ursprüngliches Formnest (8) mitbildet,
und mit einem Antriebsmodul (33) zur Steuerung der Bewegung des, oder der beweglichen Teile(s) (2, 10) des Schlittenmoduls (32),
wobei über eine Bewegung des Schlittens (2) der Bauteil inner- und außerhalb der Form in vorgesehen Größe und Gestalt hergestellt wird.
**dadurch gekennzeichnet,**
**dass** das schließseitige Formmodul (31) und/oder das düsenseitige Formmodul (30) Bestandteil(e) der jeweiligen Maschinenaufspannplatte (40, 50) ist bzw. sind und derart in die Spritzgießanlage funktionell integriert ist bzw. sind.

2. Spritzgießanlage nach Anspruch 1, **dadurch gekennzeichnet, dass** funktionell nicht integrierte Module auswechselbar sind.

3. Spritzgießanlage nach Anspruch 1 oder 2, **dadurch gekennzeichnet, dass** das schließseitigen Formmodul (31) der Spritzgießeinrichtung Bestandteil der beweglichen Maschinenaufspannplatte (40) ist.

4. Spritzgießanlage nach Anspruch 1 oder 2, **dadurch gekennzeichnet, dass** das düsenseitige Formmodul (30) der Spritzgießeinrichtung Bestandteil der festen Maschinenaufspannplatte (50) ist.

5. Spritzgießanlage nach Anspruch 1, **dadurch gekennzeichnet, dass** der Schlitten (2) des Schlittenmoduls (32) an der beweglichen Maschinenaufspannplatte (40) aufgenommen und geführt ist.

6. Spritzgießanlage nach Anspruch 5, **dadurch gekennzeichnet, dass** am oder im Schlitten (2) auswechselbare Formeinsätze positionierbar sind.

7. Spritzgießanlage nach Anspruch 1, **dadurch gekennzeichnet, dass** das Antriebsmodul (33) an der beweglichen Maschinenaufspannplatte (40) angebaut und derart mit dieser fest verbunden ist.

8. Spritzgießanlage nach Anspruch 7, **dadurch gekennzeichnet, dass** das Antriebsmodul (33), insbesondere seitlich, an der beweglichen Maschinenaufspannplatte (40) angebaut ist und mit lnterfaceelementen zur lösbaren Ankopplung an den Schlitten (2) und/oder an weitere bewegliche Formkomponenten versehen ist.

9. Spritzgießanlage nach Anspruch 5, **dadurch gekennzeichnet, dass** das Antriebsmodul (33) am Schlitten (2) angebaut ist.

10. Spritzgießanlage nach einem der Ansprüche 7 bis 9, **dadurch gekennzeichnet, dass** das Antriebsmodul (33) mitsamt seinen Komponenten von der zentralen Anlagenregelung und -steuerung gesteuert und geregelt wird.

## Claims

1. An injection moulding machine featuring a fixed and a movable machine platen (40, 50) and at least one injection unit (31), as well as an injection moulding device that is arranged between the machine platens (40, 50) and serves for manufacturing profiled, at least sectionally elongated components,
with a mould module (31) that is arranged on the clamping side and assigned to one machine platen (40),
with a mould module (30) that is arranged on the nozzle side and assigned to the other machine platen (50)
with a slide module (32) that is arranged between said modules (30, 31) and features a slide (2) that is movably supported on the mould module (30, 31) on the clamping side or the nozzle side and forms part of an original mould cavity (8),
and with a drive module (33) for controlling the movement of the movable part(s) (2, 10) of the slide module (32), wherein the component is manufactured with the intended size and shape inside and outside the mould by means of a movement of the slide (2),
**characterized in**
**that** the mould module (31) on the clamping side and/or the mould module (30) on the nozzle side form or forms part(s) of the respective machine platen (40, 50) and are or is thusly functionally integrated into the injection moulding machine.

2. The injection moulding machine according to Claim 1, **characterized in that** functionally non-integrated modules are exchangeable.

3. The injection moulding machine according to Claim 1 or 2, **characterized in that** the mould module (31) of the injection moulding device on the clamping side forms part of the movable machine platen (40).

4. The injection moulding machine according to Claim 1 or 2, **characterized in that** the mould module (30) of the injection moulding device on the nozzle side forms part of the fixed machine platen (50).

5. The injection moulding machine according to Claim 1, **characterized in that** the slide (2) of the slide module (32) is accommodated and guided on the movable machine platen (40).

6. The injection moulding machine according to Claim 5, **characterized in that** exchangeable mould inserts can be positioned on or in the slide (2).

7. The injection moulding machine according to Claim 1, **characterized in that** the drive module (33) is mounted on and thusly rigidly connected to the movable machine platen (40).

8. The injection moulding machine according to Claim 7, **characterized in that** the drive module (33) is, in particular, laterally mounted on the movable machine platen (40) and provided with interface elements for being detachably coupled to the slide (2) and/or to other movable mould components.

9. The injection moulding machine according to Claim 5, **characterized in that** the drive module (33) is mounted on the slide (2).

10. The injection moulding machine according to one of Claims 7 to 9, **characterized in that** the drive module (33) and its components are controlled and regulated by the central system control.

## Revendications

1. Installation de moulage par injection comportant une plaque de montage sur machine (40, 50) fixe et une mobile et au moins un agrégat d'injection (31) ainsi qu'un dispositif de moulage par injection disposé entre les plaques de montage sur machine (40, 50) pour la fabrication de composants profilés allongés au moins par sections,
comportant un module de moulage (31) situé côté fermeture et associé à l'autre plaque de montage sur machine (40),
un module de moulage (30) situé côté buses et associé à la plaque de montage sur machine (50)
ainsi qu'un module de chariot (32) disposé entre ces modules (30, 31) et comportant un chariot (2) s'appuyant de manière mobile au niveau du module de moulage (30, 31) situé côté fermeture ou côté buses et qui forme avec celui-ci une cavité de moulage d'origine (8)
et un module d'entraînement (33) pour commander le mouvement de la ou des pièces mobiles (2, 10) du module de chariot (32),
la pièce étant fabriquée à l'intérieur et à l'extérieur du moule dans la dimension et la forme prévue par un mouvement du chariot (2),
**caractérisée en ce que**
le module de moulage (31) situé côté fermeture et/ou le module de moulage (30) situé côté buses fait ou font partie intégrante de la plaque de montage sur machine (40, 50) respective et est ou sont intégrés de cette manière fonctionnellement dans l'installation de moulage par injection.

2. Installation de moulage par injection selon la revendication 1, **caractérisée en ce que** les modules fonctionnellement non intégrés sont interchangeables.

3. Installation de moulage par injection selon la revendication 1 ou 2, **caractérisée en ce que** le module de moulage situé côté fermeture (31) du dispositif de moulage par injection fait partie intégrante de la plaque de montage sur machine mobile (40).

4. Installation de moulage par injection selon la revendication 1 ou 2, **caractérisée en ce que** le module de moulage situé côté buses (30) du dispositif de moulage par injection fait partie intégrante de la plaque de montage sur machine fixe (50).

5. Installation de moulage par injection selon la revendication 1, **caractérisée en ce que** le chariot (2) du module de chariot (32) est reçu et guidé au niveau de la plaque de montage sur machine mobile (40).

6. Installation de moulage par injection selon la revendication 5, **caractérisée en ce que** des noyaux de moule interchangeables peuvent être positionnés au niveau du chariot (2) ou dedans.

7. Installation de moulage par injection selon la revendication 1, **caractérisée en ce que** le module d'entraînement (33) est monté sur la plaque de montage sur machine mobile (40) et est relié fixement à celle-ci de cette manière.

8. Installation de moulage par injection selon la revendication 7, **caractérisée en ce que** le module d'entraînement (33) est monté notamment latéralement sur la plaque de montage sur machine mobile (40) et est pourvu d'éléments d'interface pour le coupler de manière dissociable au chariot (2) et/ou à d'autres composants mobiles du moule.

9. Installation de moulage par injection selon la revendication 5, **caractérisée en ce que** le module d'entraînement (33) est monté au niveau du chariot (2).

10. Installation de moulage par injection selon une des revendications 7 à 9, **caractérisée en ce que** le module d'entraînement (33), y compris ses composants, est commandé et régulé par le système central de régulation et de commande de l'installation.
